# EUROPEAN PATENT APPLICATION

(11) **EP 3 862 254 A1**
(43) Date of publication of application: **11.08.2021**
(21) Application number: 20873355.0
(22) Date of filing: 12.06.2020
(51) Int. Cl.: B62J 19/00, B60L 8/00

(54) **SOLAR THIN-FILM POWER GENERATION DEVICE FOR TWO-WHEELED VEHICLE AND USE METHOD THEREOF**

(30) Priority: 19.12.2019 CN 201911315769
(71) Applicant: JIAXING ZHIXING INTERNET OF THINGS TECHNOLOGY CO., LTD, Zhejiang 314000 (CN)
(72) Inventor: CHEN, Ke, Jiaxing City, Zhejiang 314000 (CN)
(74) Representative: Monteiro Alves, Inês
(86) International application number: PCT/CN2020/095887
(87) International publication number: WO 2021/120549

(57) **Abstract**

The present invention provides a solar thin film power generation device for a two-wheeled vehicle and a using method thereof. The solar thin film power generation device for a two-wheeled vehicle is capable of being switched between a rolled-up state and an unrolled state. The solar thin film power generation device for a two-wheeled vehicle comprises a housing (10) and a thin film solar assembly, wherein the thin film solar assembly is rolled-up and arranged within the housing (10) when in a rolled-up state, and the length of the thin film solar assembly may be adjusted through a rotating device when in an unrolled state. During riding, the thin film solar assembly may be stored such that a high safety of riding is ensured. The solar assembly may continuously charge the battery to improve the vehicle's endurance. When parking, the solar assembly may be opened to charge the two-wheeled vehicle, and the required lighting angle may be quickly adjusted for use.

## Description

### TECHNICAL FIELD

This invention generally relates to the technical field of solar power generation, and more particularly, to a solar thin film power generation device for a two-wheeled vehicle and a using method thereof. The solar-film power generation device may be conveniently used under outdoor parking conditions and may quickly expand to a required size.

### BACKGROUND

Due to various factors such as the social progress, people's living needs, family economic conditions and housing situations, two-wheeled electric vehicles have been widely used in small and medium-sized cities as well as the vast rural areas, which bring great convenience to people's travel. Presently, despite various two-wheeled electric vehicles sold on the market, their operating principle is invariable: charging the vehicle's battery and then converting the electric energy into mechanical energy to make the vehicle run. According to actual situations, the shortcomings of the conventional two-wheeled electric vehicles are as follows:
1) In rainy days, electric leakage may easily occur at the positions where the wires of electric vehicles are plugged in;
2) When parking outdoors for a long time, the vehicle's body and seats are prone to aging;
3) Charging outdoors may cause fire.

### SUMMARY

The purpose of the present invention is to provide a solar thin film power generation device for a two-wheeled vehicle and a using method thereof.

To achieve the above purpose, the present invention adopts the following technical solution: a solar thin film power generation device for a two-wheeled vehicle is used for charging a battery of a two-wheeled vehicle, wherein the solar thin film power generation device for a two-wheeled vehicle is capable of being switched between a rolled-up state and an unrolled state, wherein the solar thin film power generation device for a two-wheeled vehicle comprises a housing and a thin film solar assembly, wherein the thin film solar assembly is rolled-up and arranged within the housing when in a rolled-up state, and the length of the thin film solar assembly may be adjusted through a rotating device when in an unrolled state, wherein the thin film solar assembly further comprises a voltage conversion mechanism arranged within the housing, and the thin film solar assembly is used for reversely charging the battery through the voltage conversion mechanism.

In another aspect of the present invention, the power generation material of the thin film solar assembly is one or more materials selected from cadmium telluride, copper indium gallium selenide, amorphous silicon and gallium arsenide.

In another aspect of the present invention, the rotating device comprises a rolling bearing, a universal joint and a vehicle head positioning adjusting portion, wherein the vehicle head positioning adjusting portion is connected with the universal joint, wherein the rolling bearing is connected with a rotating shaft, and the vehicle head positioning adjusting portion is connected with the housing.

In another aspect of the present invention, the rolling bearing is one selected from a bearing-type rolling bearing, a belt-type rolling bearing and a ball-type rolling bearing.

In another aspect of the present invention, the vehicle head positioning adjusting portion comprises an adjusting strip and an adjusting groove, wherein one end of the adjusting strip is connected with the head of the two-wheeled vehicle through a bolt, and the other end of the adjusting strip is provided with a clamping member, wherein the adjusting groove is formed in a first connecting rod, and the clamping member is arranged in the adjusting groove.

In another aspect of the present invention, the solar thin film power generation device for a two-wheeled vehicle further comprises a vehicle tail positioning adjusting portion, and the vehicle tail positioning adjusting portion is configured to match with the vehicle head positioning adjusting portion.

In another aspect of the present invention, the vehicle tail positioning adjusting portion is a hanging hook.

In another aspect of the present invention, the rotating shaft is provided with a rotating shaft sleeve, and a damping pad is arranged between the rotating shaft and the rotating shaft sleeve.

In another aspect of the present invention, the thin film solar assembly further comprises a control display mechanism arranged within the housing. The control display mechanism comprises a control unit and a display unit. The control unit is used for controlling the sliding or fixing of the clamping member relative to the adjusting groove. The display unit is used for displaying the electric quantity of the battery and the power generation efficiency of the sunlight of the day.

In another aspect of the present invention, the housing is provided with an adjustable locking member located at the top end of the housing, the adjustable locking member comprises an adjusting ring and a locking disk, and the adjusting ring is arranged on the locking disc in a sleeving mode. A first recess is formed in the inner wall of the adjusting ring, a first convex block is arranged on the outer wall of the locking disc, and the first recess is configured to match with the first convex block.

In another aspect of the present invention, an ortho-hexagonal through hole is formed in the center of the locking disc, and a second recess is formed in the inner wall of the through hole. A horizontal plane where the second recess is formed in is perpendicular to the axial direction of a transmission shaft, and a locking sliding block connected with the adjusting ring is arranged in the through hole.

In another aspect of the present invention, each of the two ends of the housing is provided with an LED indicator light, and the shape of the LED indicator light is one selected from a circle, a triangle and a square.

In another aspect of the present invention, the housing is further internally provided with a second built-in battery for supplying power to the control display mechanism.

A method for using the solar thin film power generation device for a two-wheeled vehicle, comprising the steps of:
Step 1: during an initial installation, making the size of the opening for installing the housing of the solar thin film device match with the tail portions of other different two-wheeled vehicles;
Step 2: during the initial installation, making the vehicle head positioning adjusting portion 13 fixedly mounted on the solar thin film device match with other different two-wheeled vehicles;
Step 3: adjusting the rotating device through the control unit, thus enabling the thin film solar assembly to reach the required length and angle;
Step 4: adjusting the length through the adjusting portion and then locking tightly;
Step 5: initiating the solar thin film device through the control unit.

Compared with the prior art, the solar thin film power generation device for a two-wheeled vehicle and the using method thereof provided by the present invention have the following advantages:
1) The thin film solar assembly of the present invention adopts a flexible material. During riding, the thin film solar assembly may be stored such that a high safety of riding is ensured. Although the angle of the thin film solar assembly receiving the sunlight is changed, the area of the solar assembly receiving the sunlight remains unchanged, which allows the solar assembly to continuously charge the battery, thereby significantly improving the endurance of the battery during riding. Normally, a conventional two-wheeled electric vehicle (equipped with a 48V/12A battery and a 350W motor) may travel for about 30 kilometers. Test results show that the maximum travel distance of the two-wheeled vehicle (also equipped with a 48V/12A battery and a 350W motor) may be increased to 60-70 kilometers after using the thin film solar assembly of the present invention in the daytime.
2) The present invention does not need a separate power source and has a simple structure. The thin film solar assembly may be rolled-up and unrolled with one hand, achieving a convenient use.
3) The present invention may not only charge a two-wheeled electric vehicle through the thin film solar assembly, but also may function as a wind shield to protect the vehicle when parking.
4) The arrangement of the thin film solar assembly in the present invention maximizes the area and power of the thin film solar assembly without changing the use function, appearance and structure of the conventional two-wheeled electric vehicle, thus ensuring that the thin film solar assembly is able to provide enough electricity in cloudy days and winter. Meanwhile, when the weather is fine, the present invention may also charge small electrical equipment such as a mobile phone on the same day after the vehicle's battery is fully charged.
5) The arrangement mode of the thin film solar assembly in the present invention enables the thin film solar assembly to meet the use voltage such that the silicon wafer does not need to be cut and the maximum utilization rate is achieved. Moreover, the processing cost of the thin film solar assembly may be greatly reduced.
6) By means of installing the flexible thin film solar assembly on the frame of the electric vehicle, the thin film solar assembly may be rolled-up downward during riding, thus ensuring high portability and flexibility of the electric vehicle. When the electric vehicle stops, the thin film solar assembly may be unrolled through a supporting mechanism. In this way, the battery is continuously charged, making and the vehicle's endurance stronger.

### BRIEF DESCRIPTION OF THE DRAWINGS

Figure 1 is a conceptual diagram illustrating a three-dimensional structure of the present invention.
Figure 2 is a conceptual diagram illustrating a side view of the present invention.
Figure 3 is a conceptual diagram illustrating a sectional view of the present invention taken along the line A-A in Figure 2.

Marking Instructions of the Drawings: 10-Housing, 11-Voltage Conversion Mechanism, 12-Rolling Bearing, 13-Vehicle Head Positioning Adjusting Portion, 14-Rotating Shaft, 15-Vehicle Tail Positioning Adjusting Portion.

### DETAILED DESCRIPTION

The present invention provides a solar thin film power generation device for a two-wheeled vehicle and a using method thereof. Preferred embodiments are combined hereinafter to further elaborate the technical solution of the present invention.

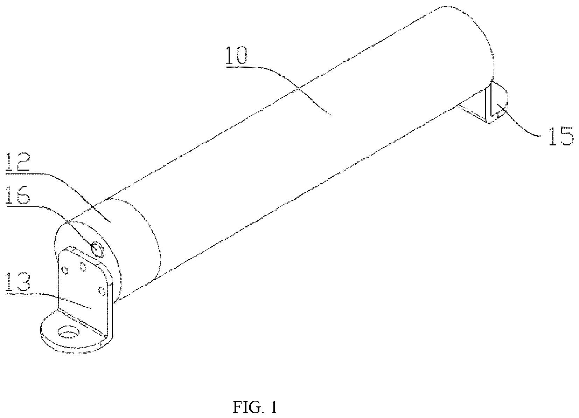

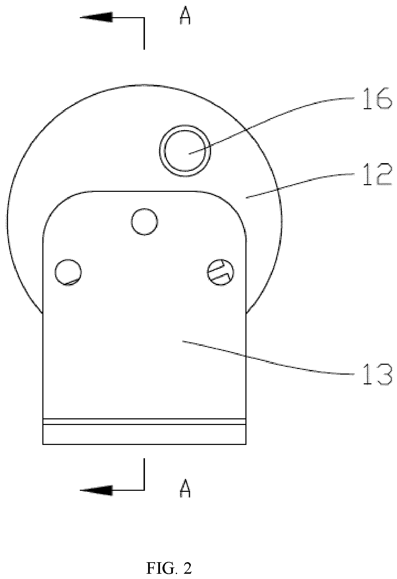

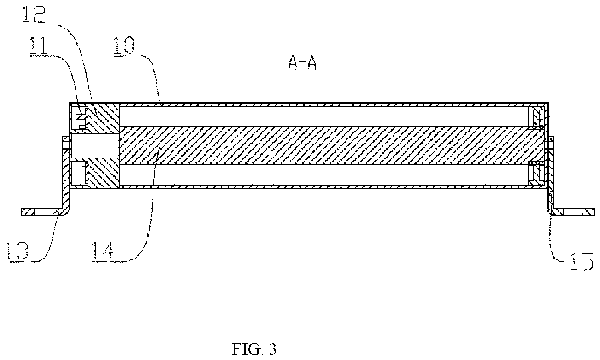

Preferred embodiments:
As shown in Figures 1-3, preferably, the solar thin film power generation device for a two-wheeled vehicle is used for charging a battery (not shown) of a two-wheeled vehicle. The solar thin film power generation device for a two-wheeled vehicle is capable of being switched between a rolled-up state and an unrolled state. The solar thin film power generation device for a two-wheeled vehicle comprises a housing 10 and a thin film solar assembly, wherein the thin film solar assembly is rolled-up and arranged within the housing 10 when in a rolled-up state, and the length of the thin film solar assembly may be adjusted through a rotating device when in an unrolled state, wherein the thin film solar assembly further comprises a voltage conversion mechanism 11 arranged within the housing 10, and the thin film solar assembly is used for reversely charging the battery through the voltage conversion mechanism 11.

More specifically, the power generation material of the thin film solar assembly is one or more materials selected from cadmium telluride, copper indium gallium selenide, amorphous silicon and gallium arsenide.

Further, the rotating device comprises a rolling bearing 12, a universal joint and a vehicle head positioning adjusting portion 13 connected with the universal joint, wherein the rolling bearing 12, the universal joint and the vehicle head positioning adjusting portion are sequentially connected, wherein the rolling bearing 12 is connected with a rotating shaft 14, and the vehicle head positioning adjusting portion 13 is connected with the housing 10.

More specifically, the rolling bearing 12 is one selected from a bearing-type rolling bearing, a belt-type rolling bearing and a ball-type rolling bearing.

Further, the vehicle head positioning adjusting portion 13 comprises an adjusting strip and an adjusting groove, wherein one end of the adjusting strip is connected with the head (not shown) of the two-wheeled vehicle through a bolt, and the other end of the adjusting strip is provided with a clamping member, wherein the adjusting groove is formed in a first connecting rod, and the clamping member is arranged in the adjusting groove.

Further, the solar thin film power generation device for a two-wheeled vehicle further comprises a vehicle tail positioning adjusting portion 15, and the vehicle tail positioning adjusting portion 15 is configured to match with the vehicle head positioning adjusting portion 13.

More specifically, the vehicle tail positioning adjusting portion 15 is a hanging hook.

Further, the rotating shaft 14 is provided with a rotating shaft sleeve, and a damping pad is arranged between the rotating shaft 14 and the rotating shaft sleeve.

Further, the thin film solar assembly further comprises a control display mechanism arranged within the housing 10. The control display mechanism comprises a control unit and a display unit. The control unit is used for controlling the sliding or fixing of the clamping member relative to the adjusting groove. The display unit is used for displaying the electric quantity of the battery and the power generation efficiency of the sunlight of the day.

Further, the housing 10 is provided with an adjustable locking member located at the top end of the housing 10, the adjustable locking member comprises an adjusting ring and a locking disk, and the adjusting ring is arranged on the locking disc in a sleeving mode. A first recess is formed in the inner wall of the adjusting ring, a first convex block is arranged on the outer wall of the locking disc, and the first recess is configured to match with the first convex block.

Further, an ortho-hexagonal through hole is formed in the center of the locking disc, and a second recess is formed in the inner wall of the through hole. A horizontal plane where the second recess is formed in is perpendicular to the axial direction of a transmission shaft, and a locking sliding block connected with the adjusting ring is arranged in the through hole.

Further, each of the two ends of the housing 10 is provided with an LED indicator light 16, and the shape of the LED indicator light 16 is one selected from a circle, a triangle and a square.

Further, the housing 10 is further internally provided with a second built-in battery for supplying power to the control display mechanism.

The present invention also provides a method for using the solar thin film power generation device for a two-wheeled vehicle. The method for using the solar thin film power generation device for a two-wheeled vehicle, comprising the steps of:
Step 1: during an initial installation, making the size of the opening for installing the housing of the solar thin film device match with the tail portions of other different two-wheeled vehicles;
Step 2: during the initial installation, making the vehicle head positioning adjusting portion 13 fixedly mounted on the solar thin film device match with other different two-wheeled vehicles;
Step 3: adjusting the rotating device through the control unit, thus enabling the thin film solar assembly to reach the required length and angle;
Step 4: adjusting the length through the adjusting portion and then locking tightly;
Step 5: initiating the solar thin film device through the control unit.

It is worth mentioning that the technical features such as the specific formula of cadmium telluride involved in the present invention belong to the prior art. The specific structure, working principle, possible control mode and spatial arrangement of these technical features may be selected using the conventional method in this field, which shall not be regarded as the inventive points of the present invention and thus are not further detailed.

For those skilled in the art, the technical solutions described in the aforesaid embodiments may be modified, or some of the technical features may be equally replaced. Therefore, any modification, equivalent replacement and improvement made within the spirit and principle of the present invention shall fall into the scope of the present invention.

## Claims

1. A solar thin film power generation device for a two-wheeled vehicle, wherein the device is used for charging a battery of a two-wheeled vehicle, wherein the device is capable of being switched between a rolled-up state and an unrolled state, wherein the device comprises:
a housing,
and a thin film solar assembly, wherein the thin film solar assembly is rolled-up and arranged within the housing when in a rolled-up state, and the length of the thin film solar assembly may be adjusted through a rotating device when in an unrolled state, wherein the thin film solar assembly further comprises:
a voltage conversion mechanism arranged within the housing, and the thin film solar assembly is used for reversely charging the battery through the voltage conversion mechanism.

2. The solar thin film power generation device for a two-wheeled vehicle of claim 1, wherein the power generation material of the thin film solar assembly is one or more materials selected from cadmium telluride, copper indium gallium selenide, amorphous silicon and gallium arsenide.

3. The solar thin film power generation device for a two-wheeled vehicle of claim 1, wherein the rotating device comprises:
a rolling bearing, a universal joint and a vehicle head positioning adjusting portion that are sequentially connected, wherein the vehicle head positioning adjusting portion is connected with the universal joint, wherein the rolling bearing is connected with a rotating shaft, and the vehicle head positioning adjusting portion is connected with the housing.

4. The solar thin film power generation device for a two-wheeled vehicle of claim 3, wherein the rotating shaft is provided with a rotating shaft sleeve, and a damping pad is arranged between the rotating shaft and the rotating shaft sleeve.

5. The solar thin film power generation device for a two-wheeled vehicle of claim 3, wherein the vehicle head positioning adjusting portion comprises:
an adjusting strip and an adjusting groove, wherein one end of the adjusting strip is connected with the head of the two-wheeled vehicle through a bolt, and the other end of the adjusting strip is provided with a clamping member, wherein the adjusting groove is formed in a first connecting rod, and the clamping member is arranged in the adjusting groove.

6. The solar thin film power generation device for a two-wheeled vehicle of claim 5, wherein the solar thin film power generation device for a two-wheeled vehicle further comprises a vehicle tail positioning adjusting portion, and the vehicle tail positioning adjusting portion is configured to match with the vehicle head positioning adjusting portion.

7. The solar thin film power generation device for a two-wheeled vehicle of claim 6, wherein the vehicle tail positioning adjusting portion is a hanging hook.

8. The solar thin film power generation device for a two-wheeled vehicle of claim 5, wherein the thin film solar assembly further comprises:
a control display mechanism arranged within the housing, wherein the control display mechanism comprises:
a control unit and a display unit, wherein the control unit is used for controlling the sliding or fixing of the clamping member relative to the adjusting groove,
wherein the display unit is used for displaying the electric quantity of the battery and the power generation efficiency of the sunlight of the day.

9. The solar thin film power generation device for a two-wheeled vehicle of claim 1, wherein each of the two ends of the housing is provided with an LED indicator light, and the shape of the LED indicator light is one selected from a circle, a triangle and a square.

10. A method for using the solar thin film power generation device for a two-wheeled vehicle of claims 1-9, comprising the steps of:
Step 1: during an initial installation, making the size of the opening for installing the housing of the solar thin film device match with the tail portions of other different two-wheeled vehicles;
Step 2: during the initial installation, making the vehicle head positioning adjusting portion 13 fixedly mounted on the solar thin film device match with other different two-wheeled vehicles;
Step 3: adjusting the rotating device through the control unit, thus enabling the thin film solar assembly to reach the required length and angle;
Step 4: adjusting the length through the adjusting portion and then locking tightly;
Step 5: initiating the solar thin film device through the control unit.
